Europäisches Patentamt

(19) European Patent Office

Office européen des brevets

(11) Numéro de publication : **0 101 629**
**B1**

(12) FASCICULE DE BREVET EUROPÉEN

(45) Date de publication du fascicule du brevet :
07.05.86

(51) Int. Cl.⁴ : **H 02 M   7/537**

(21) Numéro de dépôt : **83201113.4**

(22) Date de dépôt : **28.07.83**

(54) Ensemble statique de conversion d'énergie électrique à semi-conducteurs.

(30) Priorité : **16.08.82 FR 8214249**

(43) Date de publication de la demande :
**29.02.84 Bulletin 84/09**

(45) Mention de la délivrance du brevet :
**07.05.86 Bulletin 86/19**

(84) Etats contractants désignés :
**AT BE CH DE FR GB IT LI LU NL SE**

(56) Documents cités :
**FR-A- 1 417 741
FR-A- 2 437 103
FR-A- 2 441 290
US-A- 4 117 364**

(73) Titulaire : **ANVAR Agence Nationale de Valorisation
de la Recherche
43, rue Caumartin
F-75436 Paris Cédex 09 (FR)**

(72) Inventeur : **Foch, Henri
33, rue Jean Tallien
F-31200 Toulouse (FR)**
Inventeur : **Roux, Jacques
23, route d'Albi
F-31200 Toulouse (FR)**

(74) Mandataire : **Barre, Philippe
Cabinet Barre-Gatti-Laforgue 95 rue des Amidonniers
F-31069 Toulouse Cédex (FR)**

Jouve, 18, rue St-Denis, 75001 Paris, France

## Description

L'invention concerne une application du convertisseur statique d'énergie électrique visé dans le brevet FR-A-2 441 290 ou dans le brevet US correspondant US-A-4 330 819.

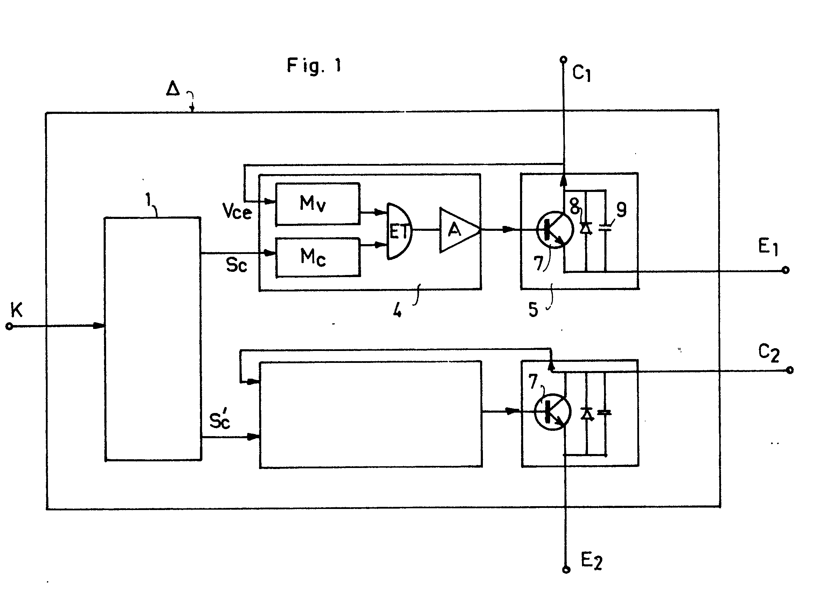

Il a été décrit dans ces brevets un convertisseur de base et un dispositif associant deux desdits convertisseurs de base ; ce dispositif schématisé à la figure 1 des dessins annexés sera désigné globalement ci-après par la lettre grecque Δ. Le convertisseur de base et le dispositif Δ dans lequel il s'intègre ont pour avantage essentiel de supprimer totalement les pertes énergétiques lors des commutations d'amorçage et de réduire considérablement ces pertes lors des commutations de blocage. Ils utilisent des composants de puissance à semi-conducteurs, à blocage commandé, qui, dans les brevets sus-évoqués, sont désignés par « transistors de puissance » ; afin d'avoir une terminologie plus adaptée, on désignera ci-après ces composants par « interrupteurs statiques à blocage commandé », cette désignation visant tout composant qui répond à la définition suivante : « composant électronique statique

possédant une électrode de commande (base, grille, gâchette...) qui sera désignée ci-après par « base » (afin de simplifier la terminologie et par référence avec la désignation utilisée dans les transistors), une électrode de puissance (émetteur, source, cathode...) désignée ci-après par « émetteur » et une seconde électrode de puissance (collecteur, drain, anode...) désignée ci-après par « collecteur »,

susceptible de présenter deux états, un état de conduction caractérisé par une faible chute de la tension entre le collecteur et l'émetteur ($V_{CE}$), et un état de blocage caractérisé par un faible courant de fuite entre émetteur et collecteur, le changement d'état étant provoqué par commande de la base ».

Bien entendu, dans la plupart des cas, ce sont des transistors de puissance (bipolaires ou « M.O.S. ») qui seront utilisés mais ce peut être également des thyristors ou d'autres composants. Il est à noter que, pour élargir la gamme de tension dans laquelle le dispositif est utilisable (sans réduction de ses performances en courant), il est particulièrement avantageux d'utiliser des transistors ayant une tenue en tension $V_{CEX}$ supérieure à leur tenue en tension $V_{CEO}$ comme cela est indiqué dans les brevets sus-évoqués. Il convient de rappeler que la tenue en tension $V_{CEX}$ se définit comme la tenue en tension du transistor à courant collecteur nul et base polarisée négativement, cependant que la tenue en tension $V_{CEO}$ se définit comme la tenue en tension, base ouverte.

Le convertisseur de base sus-évoqué est essentiellement composé :

— d'au moins un étage de puissance doté, d'une part, d'au moins un interrupteur statique à blocage commandé ayant un collecteur, une base et un émetteur, d'autre part, d'un circuit d'aide à la commutation associé à chaque interrupteur statique pour dériver son courant collecteur au cours des commutations de blocage de celui-ci,

— d'un étage de commande adapté pour engendrer pour chaque interrupteur statique un signal de commande Sc de forme appropriée à la conversion à réaliser,

— d'un étage intermédiaire de traitement, associé à chaque interrupteur statique et possédant une entrée reliée à l'étage de commande pour recevoir le signal Sc, une autre entrée reliée à l'étage de puissance pour détecter la tension collecteur/émetteur $V_{CE}$ de l'interrupteur statique et une sortie reliée à la base dudit interrupteur statique pour déclencher les commutations de celui-ci, ledit étage intermédiaire de traitement étant adapté pour piloter la base dudit interrupteur de façon à rendre l'interrupteur conducteur dans le seul cas où, à la fois, le signal de commande Sc présente une valeur correspondant à une mise en conduction et la tension $V_{CE}$ se trouve voisine de zéro et de façon à assurer une polarisation inverse de ladite base d'interrupteur dans tous les autres cas en vue de bloquer l'interrupteur.

On pourra se reporter aux brevets évoqués ci-dessus pour plus de précision sur ce convertisseur de base.

La figure 1 des dessins annexés schématise la structure générale du dispositif Δ réalisé à partir de deux convertisseurs de base tels que ci-dessus définis. On retrouve sur cette figure les étages de puissance 5 de chaque convertisseur de base, 1' étage intermédiaire de traitement 4 associé à chaque interrupteur 7 des étages de puissance et l'étage de commande 1 délivrant le signal Sc pour chaque interrupteur statique. Ce signal Sc présente notamment la forme de trains d'impulsions représentant des ordres de blocage et ordres de mise en conduction successifs de l'interrupteur statique concerné.

A chaque interrupteur statique d'un étage de puissance sont associés une diode 8 de récupération d'énergie et un circuit d'aide à la commutation pour dériver le courant collecteur de l'interrupteur statique au cours des commutations de blocage de celui-ci ; ce circuit d'aide à la commutation peut être formé par un condensateur 9 disposé en parallèle entre l'émetteur et le collecteur de l'interrupteur 7.

Selon un mode de réalisation décrit dans les brevets précités, chaque étage intermédiaire 4 peut en particulier comprendre :

— un circuit Mv de mise en forme de la tension $V_{CE}$, connecté à l'interrupteur statique considéré et adapté pour fournir un signal à deux états, l'un correspondant à une tension $V_{CE}$ voisine de 0, l'autre à une tension différente,

— un circuit Mc de mise en forme du signal de commande Sc adapté pour fournir un signal à deux états, l'un correspondant aux valeurs de mise en conduction, l'autre aux valeurs de blocage de ce signal de commande,

— une unité logique ET, reliée aux deux circuits Mv et Mc et adaptée pour fournir un signal à deux états, un état 1 correspondant à la conduction de l'interrupteur statique pour une tension $V_{CE}$ dudit interrupteur ≃ 0 et pour un signal Sc ayant une valeur de mise en conduction, et un état 2 correspondant au blocage dudit interrupteur si l'une des deux conditions ci-dessus n'est pas satisfaite,

— et un circuit d'adaptation A, relié à l'unité logique ET et à la base de l'interrupteur considéré pour fournir vers cette base un courant d'alimentation tel que la conduction dudit interrupteur s'effectue pour l'état 1 du signal issu de l'unité logique ET et que le blocage s'effectue pour l'état 2 de ce signal.

Le dispositif Δ formé par deux convertisseurs de base agencés comme le montre la figure 1 comporte quatre bornes de puissance reliées aux électrodes de puissance des deux interrupteurs statiques 7 ; pour simplifier la description qui suit, on a désigné par $C_1$ la borne reliée au collecteur du premier interrupteur, par $E_1$ la borne reliée à l'émetteur de ce premier interrupteur, par $C_2$ la borne reliée au collecteur du second interrupteur 7 et par $E_2$ la borne reliée à l'émetteur de ce second interrupteur.

La présente invention vise à étendre le domaine d'utilisation de ce dispositif à des tensions supérieures qui peuvent être considérablement plus élevées (en particulier supérieures à la tension que peut supporter chaque interrupteur à ses bornes), et ce, tout en bénéficiant des avantages spécifiques du convertisseur de base (suppression ou réduction des pertes énergétiques de commutation ; avantageusement, exploitation de la tension $V_{CEX} > V_{CEO}$ dans le cas de transistors bipolaires).

L'idée directrice suivie dans la présente invention pour permettre d'étendre le domaine des tensions d'entrée consiste à disposer en série les interrupteurs statiques de plusieurs dispositifs Δ et à ne leur faire supporter qu'une fraction de la tension d'entrée. Cette idée directrice est en soi connue dans le secteur technique et se retrouve, par exemple, sous une forme voisine, dans un sous-ensemble d'un dispositif multiplicateur de tension décrit dans le brevet FR-EXXON n° 79 23434 publié sous le n° 2 437 103 et déposé sous priorité de la demande US n° 944 634 du 21 septembre 1978.

Toutefois, il n'est pas possible de faire une simple transposition des moyens constitutifs de ce sous-ensemble EXXON pour obtenir le dispositif de l'invention et atteindre les objectifs rappelés plus haut.

En effet, une telle transposition pourrait permettre d'étendre le domaine des tensions, mais, en aucun cas, ne permettrait de mettre à profit les performances du convertisseur de base (c'est-à-dire en particulier de supprimer totalement les pertes énergétiques lors des commutations d'amorçage) : le simple montage d'interrupteurs en série comme illustré dans le brevet EXXON est incompatible avec l'obtention des conditions de commutations nécessaires au niveau de chacun des interrupteurs, à savoir : annulation spontanée de la tension $V_{CE}$ de chaque interrupteur à chaque cycle de façon que l'étage intermédiaire de traitement puisse, à chaque cycle, remplir sa fonction (condition nécessaire pour l'obtention des performances visées) :

rendre à chaque cycle l'interrupteur statique conducteur dans le seul cas où à la fois :

le signal de commande Sc correspond à une mise en conduction,

ET

la tension $V_{CE}$ se trouve voisine de 0,
bloquer l'interrupteur dans tous les autres cas.

De telles conditions sont totalement étrangères au brevet EXXON qui ne se soucie pas des pertes énergétiques de commutations et leur obtention pour des interrupteurs statiques montés en série n'est pas évidente pour l'homme du métier à partir des enseignements de ce brevet et de ceux des brevets de base évoqués précédemment.

La présente invention vise à résoudre le problème ci-dessus évoqué et à fournir un ensemble statique de conversion d'énergie électrique à semi-conducteur, réalisé à partir de plusieurs dispositifs Δ précités et apte à traiter des tensions d'entrée beaucoup plus élevées que celles admissibles par chaque dispositif Δ et ce, tout en bénéficiant des avantages spécifiques des dispositifs Δ, c'est-à-dire en assurant, à chaque cycle, pour chacun des interrupteurs de ces dispositifs, les conditions de commutation appropriées et ce sans risque d'incompatibilité entre les circuits des divers dispositifs Δ.

L'ensemble statique visé par la présente invention est destiné à convertir une tension continue d'entrée (2E) en une tension alternative d'amplitude de crête inférieure ou égale à cette tension continue (2E). Selon l'invention :

n dispositifs Δ (n ⩾ 2) tels que définis précédemment, sont agencés en série de sorte que les bornes $(E_1)$ et $(C_2)$ d'un dispositif soient respectivement reliées aux bornes $(C_1)$ et $(E_2)$ du dispositif suivant, les deux bornes $(C_1)$ et $(E_2)$ du premier dispositif Δ recevant la tension continue d'entrée (2E), et les deux bornes $(E_1)$ et $(C_2)$ du dernier dispositif Δ étant reliées entre elles pour former une première sortie $(S_1)$ de l'ensemble, appelée à être reliée à une charge 50,

un étage répartiteur de tension est connecté aux bornes $(C_1)$ et $(E_2)$ des différents dispositifs (Δ),

les deux convertisseurs de chaque dispositif sont commandés en opposition par un étage de commande commun adapté pour engendrer pour les deux interrupteurs statiques desdits convertisseurs, des signaux de commande Sc et S'c opposés, de forme appropriée à la conversion à réaliser,

les étages de commande sus-évoqués des différents dispositifs Δ sont pilotés par une unité de commande centralisée, adaptée pour provoquer un retard des signaux de commande Sc, S'c d'un dispositif $\Delta$ par rapport aux signaux de commande Sc, S'c du dispositif qui le précède dans la série.

Selon un mode de réalisation préférentiel, l'étage répartiteur de tension est adapté pour diviser la tension d'alimentation 2E en n fractions approximativement égales 2E/n et pour appliquer à chaque interrupteur statique une fraction 2E/n de ladite tension.

L'ensemble de conversion ainsi réalisé peut fonctionner sous des tensions d'alimentation 2E considérablement plus élevées, puisque chaque interrupteur statique d'un dispositif $\Delta$ n'a à supporter qu'une fraction 2E/n de cette tension d'alimentation (2E). Par un choix convenable du nombre n de dispositifs $\Delta$, il est possible pour des tensions de l'ordre de quelques milliers de volts, de ramener sur chaque interrupteur statique une tension compatible avec sa tenue en tension ; dans le cas où les interrupteurs statiques sont des transistors de puissance possédant une tenue en tension $V_{CEX} > V_{CEO}$, c'est cette tenue $V_{CEX}$ qui constitue la limite supérieure de tension à ne pas dépasser aux bornes du transistor ; l'exploitation de cette propriété de certains transistors (en particulier transistor « Mesa inversé ») permet, pour une tension d'entrée donnée (2E), de réduire le nombre n de dispositifs nécessaires.

Comme on le comprendra mieux plus loin, le fonctionnement de l'ensemble conforme à l'invention peut se résumer ainsi :

L'unité de commande centralisée assure une chronologie dans les blocages des premiers interrupteurs des différents dispositifs $\Delta$, ce qui donne le temps aux circuits d'aide à la commutation de dériver le courant de charge de l'interrupteur en cours de blocage (réduction des pertes au blocage) et neutralise l'influence des dispersions inévitables des durées de blocage des divers interrupteurs (suppression des surtensions accidentelles).

Une des fonctions du répartiteur de tension est alors d'assurer, durant ces blocages échelonnés, la continuité du courant de charge.

Au cours de ces blocages échelonnés des premiers interrupteurs, les seconds interrupteurs des différents dispositifs $\Delta$ sont le siège des phénomènes résumés ci-après.

Pour un dispositif $\Delta$ donné, la mise en conduction effective du second interrupteur ne peut apparaître qu'après le blocage du premier interrupteur (S'c opposé à Sc) et cette propriété est valable pour l'ensemble des dispositifs $\Delta$, à savoir que les mises en conduction effective de l'ensemble des seconds interrupteurs ne peuvent apparaître qu'après blocage de la totalité des premiers interrupteurs. Ces conditions de commutation excluent tout risque d'apparition d'une surtension accidentelle aux bornes d'un quelconque des seconds interrupteurs (surtension qui serait consécutive à un amorçage prématuré de l'un de ces seconds interrupteurs).

De plus, la tension $V_{CE}$ de chaque second interrupteur d'un dispositif $\Delta$ chute de 2E/n à chaque blocage d'un des premiers interrupteurs ; ainsi pour chaque second interrupteur, cette tension $V_{CE}$ atteindra nécessairement une valeur nulle lorsque la totalité des premiers interrupteurs sera bloquée (et uniquement dans ce cas).

Bien entendu, au demi-cycle suivant (ou alternance suivante), les rôles des premier et second interrupteurs sont permutés.

Ainsi, on réalise une mise en série des interrupteurs en respectant la logique de fonctionnement de chacun d'eux, ce qui garantit l'obtention des performances spécifiques de chacun des dispositifs.

L'invention sera mieux comprise à la lecture de la description qui suit, en référence aux dessins annexés qui en présentent à titre non limitatif un mode de réalisation ; sur ces dessins qui font partie intégrante de la présente description :

la figure 1 déjà commentée est un schéma de rappel de la structure générale d'un dispositif $\Delta$ formé de deux convertisseurs de base,

la figure 2 est un schéma de principe d'un ensemble de conversion conforme à l'invention,

la figure 3 est un schéma électrique de détail d'un des sous-ensembles de la figure 2,

la figure 4 représente sous forme simplifiée le schéma électrique de cet ensemble dans le cas de la mise en série de quatre dispositifs,

les figures 5a à 5k illustrent les formes d'ondes des grandeurs caractéristiques de cet ensemble de conversion,

la figure 6 est un schéma d'un mode de réalisation d'une unité de commande centralisée pilotant quatre étages de commande associés à quatre dispositifs $\Delta$,

la figure 7 est un schéma de détail de sous-ensembles de la figure 6.

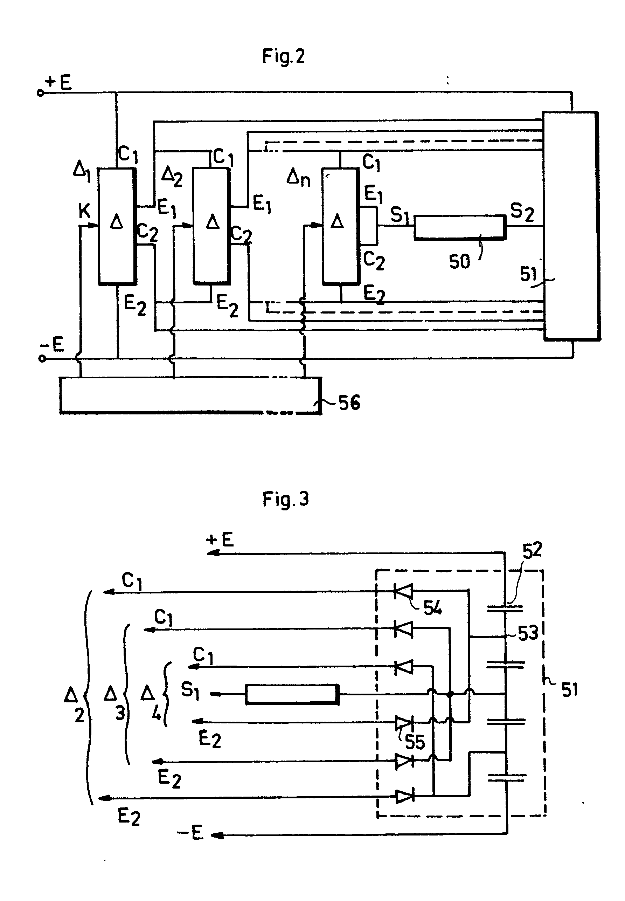

L'ensemble de conversion représenté à titre d'exemple à la figure 2 comprend n dispositifs $\Delta$ de structure telle que rappelée plus haut et qui sont agencés en série les uns à la suite des autres.

Le premier dispositif désigné par $\Delta_1$ est connecté, d'une part, par ses bornes $C_1$ et $E_2$ respectivement aux bornes +E et −E d'une alimentation de puissance, d'autre part, par ses bornes $E_1$ et $C_2$ respectivement aux bornes $C_1$ et $E_2$ du deuxième dispositif désigné par $\Delta_2$.

D'une manière générale, les bornes $E_1$ et $C_2$ du dispositif $\Delta_i$ sont respectivement connectées aux bornes $C_1$ et $E_2$ du dispositif suivant $\Delta_{i+1}$.

Le dernier dispositif $\Delta_n$ a ses deux bornes $E_1$ et $C_2$ réunies pour former une première sortie $S_1$ à laquelle est reliée une charge inductive 50.

Un étage répartiteur de tension 51 est connecté aux bornes $C_1$ et $E_2$ des différents convertisseurs $\Delta_2$ à $\Delta_n$ et comprend une borne faisant office de seconde sortie $S_2$ à laquelle est reliée l'autre extrémité de la charge.

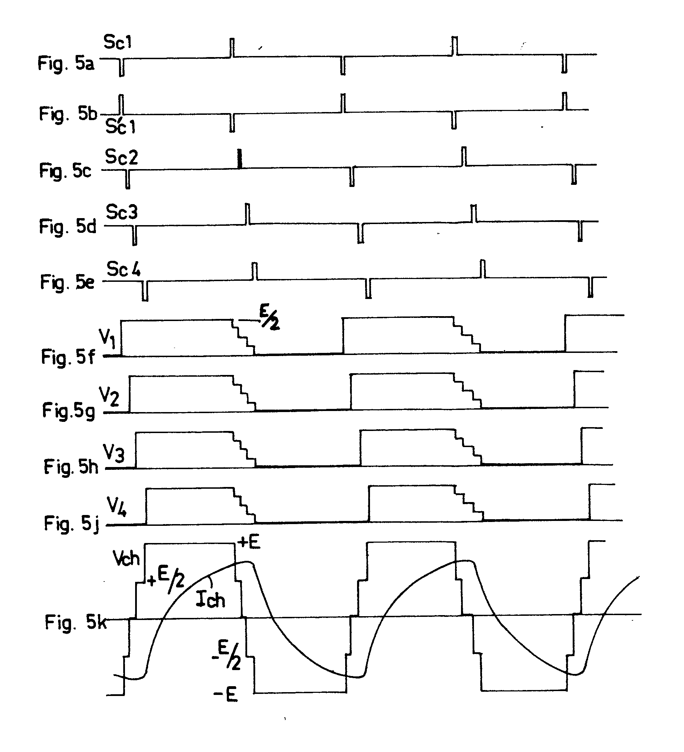

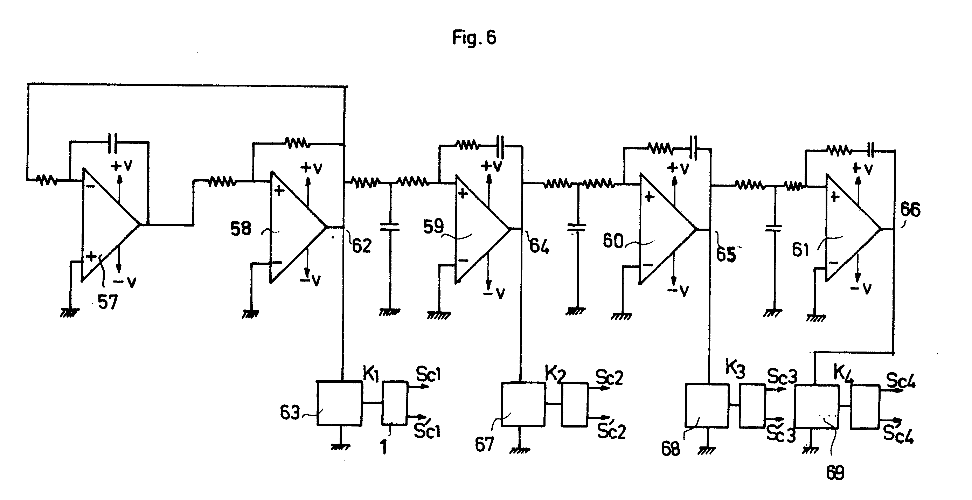

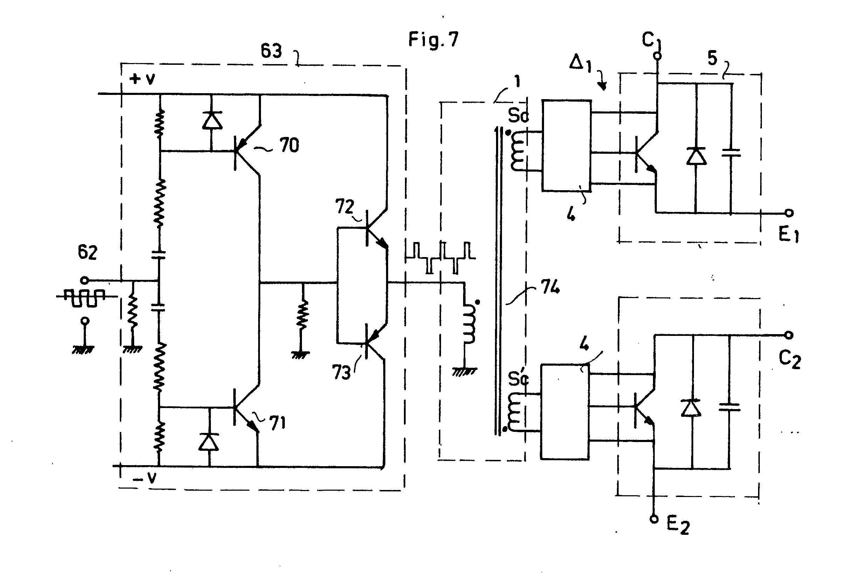

En outre, les entrées de commande K de chaque dispositif $\Delta$ sont reliées à une unité de commande centralisée 56 qui est adaptée pour décaler dans le temps les commandes Sc et S'c des différents dispositifs Δ, comme l'illustrent les figures 5a à 5e ; une telle unité de commande peut être réalisée électroniquement par voie analogique ou numérique ; un mode de réalisation analogique sera décrit plus loin en référence aux figures 6 et 7.

L'étage 51 peut être réalisé comme illustré à la figure 3, au moyen, d'une part, d'un ensemble de condensateurs tels que 52, montés en échelle alimentée par la tension 2E et comportant des liaisons intermédiaires telles que 53 en vue de fournir une division de la tension, d'autre part, d'un ensemble de diodes telles que 54 et 55 connectées aux liaisons intermédiaires 53 et aux électrodes de puissance $C_1$, $E_2$ des interrupteurs (qui en l'exemple ont été représentés comme étant des transistors de puissance), en vue d'appliquer à ces interrupteurs la répartition de tension fournie par l'échelle de condensateurs.

Les condensateurs 52 sont en nombre au moins égal au nombre n de dispositif Δ (en l'exemple représenté à la figure 3, ces condensateurs sont au nombre de 4 égal au nombre supposé de dispositifs Δ). Ils forment donc au moins (n-1) liaisons intermédiaires 53.

Ces condensateurs ont des capacités approximativement égales, de valeur élevée telle que leur impédance à la fréquence des commutations des dispositifs Δ soit négligeable par rapport à l'impédance de la charge. Ainsi, ils divisent la tension d'alimentation en n fractions approximativement égales 2E/n.

Les diodes sont réparties en deux groupes comprenant chacun (n-1) diodes.

Les (n-1) diodes 54 du premier groupe sont connectées aux (n-1) liaisons intermédiaires 53 en vue de les relier aux bornes $C_1$ des dispositifs $\Delta_2$ ... $\Delta_n$ (dispositif $\Delta_1$ excepté) ; ces diodes 54 sont orientées de sorte que leurs anodes soient tournées vers l'échelle des condensateurs et leurs cathodes soient tournées vers les bornes $C_1$.

Les (n-1) diodes 55 du second groupe sont connectées aux (n-1) liaisons intermédiaires 53 en vue de les relier aux bornes $E_2$ des dispositifs $\Delta_2$ ... $\Delta_n$ (dispositif $\Delta_1$ excepté) ; ces diodes 55 sont orientées de sorte que leurs cathodes soient tournées vers l'échelle des condensateurs et leurs anodes soient tournées vers les bornes $E_2$.

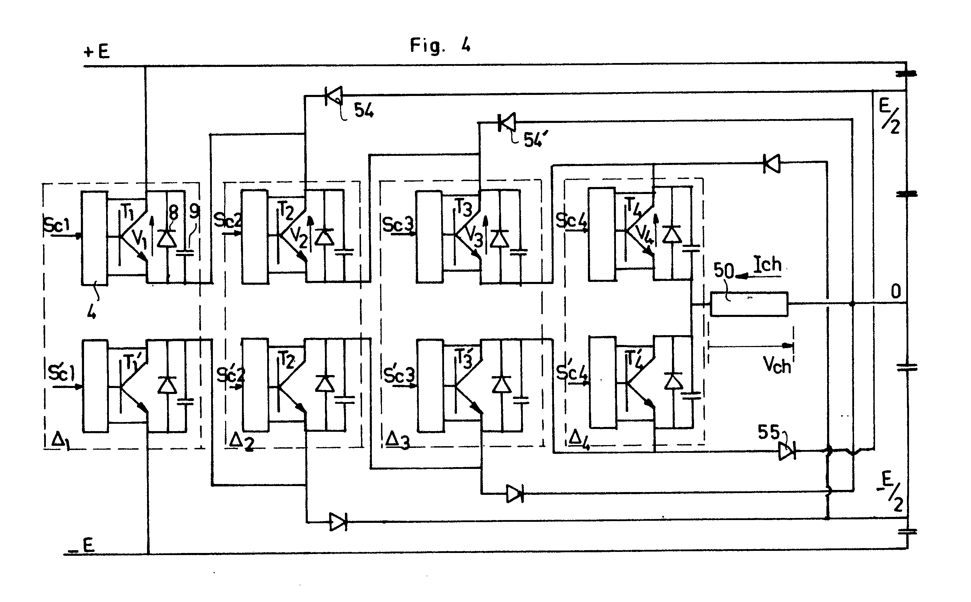

Le fonctionnement de l'ensemble est expliqué ci-après en référence, d'une part, à la figure 4 qui schématise les circuits électriques pour un ensemble de conversion comprenant quatre dispositifs Δ, d'autre part, aux figures 5a à 5k donnant les formes d'ondes des grandeurs suivantes, caractéristiques de cet ensemble :

figure 5a signal $S_{c1}$ de commande du premier transistor du premier dispositif $\Delta_1'$

figure 5b signal $S'_{c1}$ (opposé de $S_{C1}$) de commande du second transistor du premier dispositif $\Delta_1'$

figure 5c, 5d, 5e respectivement signaux $S_{c2}$, $S_{c3}$, $S_{c4}$, de commande des premiers transistors des dispositifs $\Delta_2$, $\Delta_3$ et $\Delta_4$,

figure 5f, 5g, 5h, 5j respectivement tensions $V_1$, $V_2$, $V_3$ et $V_4$ aux bornes $C_1$, $E_1$ des premiers transistors des quatre dispositifs $\Delta_1$, $\Delta_2$, $\Delta_3$, $\Delta_4$,

figure 5k tension $V_{ch}$ et courant $I_{ch}$ relatifs à la charge.

On suppose que l'ensemble fonctionne en régime permanent et que, initialement, les quatre premiers transistors de puissance (désignés à la figure 4 par $T_1$, $T_2$, $T_3$, $T_4$) sont conducteurs.

Le transistor $T_1$ reçoit un ordre de blocage représenté par la première impulsion du signal $S_{C1}$ (figure 5a). Il se bloque et, lorsque la tension $V_1$ à ses bornes ($C_1$, $E_1$) prend la valeur E/2 (figure 5f), la diode 54 correspondante entre en conduction et assure la continuité du courant de charge.

Lorsque le transistor $T_2$ reçoit à son tour un ordre de blocage représenté par la première impulsion du signal $S_{C2}$ (figure 5c), il se bloque à son tour ; lorsque la tension $V_2$ à ses bornes prend la valeur E/2 (figure 5g), la diode 54' correspondante entre en conduction et assure la roue libre de la charge.

Et ainsi de suite pour les transistors $T_3$ et $T_4$.

Durant ces phases, les tensions aux bornes de chaque transistor $T_1$, à $T_4$ (seconds transistors des dispositifs) s'effondrent progressivement de E/2 à O, ce qui fournit les conditions de leur amorçage ultérieur.

Le mécanisme de commutation est symétrique pour l'alternance suivante.

Ainsi, la tension aux bornes de la charge varie entre +E et −E (en l'exemple de façon pseudo rectangulaire) cependant que la tension aux bornes de chaque transistor de puissance ne varie qu'entre O et E/2.

Il est à noter que la répartition des tensions dans l'échelle des condensateurs peut être stabilisée et/ou ajustée par des résistances classiques d'équilibrage externe et/ou par une action appropriée de l'unité de commande centralisée (modulation des retards entre les ordres de blocage successifs).

L'ensemble conforme à l'invention peut en particulier être utilisé dans les domaines d'applications suivants : conversion continue/alternative à fréquence fixe ou variable, conversion intermédiaire à moyenne fréquence d'un système de conversion continu/continu...

La figure 6 schématise un exemple d'unité de commande centralisée 56, pilotant les quatre étages de commande 1 des quatre dispositifs de la figure 4.

L'unité de commande centralisée illustrée est réalisée au moyen d'amplificateurs opérationnels 57, 58, 59, 60, 61. Les amplificateurs 57 et 58, respectivement câblés en intégrateur et en comparateur de tension, sont rebouclés pour former un oscillateur qui délivre à sa sortie 62 un signal appelé à piloter le dispositif $\Delta_1$ après mise en forme dans un conformateur 63.

Les amplificateurs 59, 60, 61 forment, chacun, un étage déphaseur et délivrent à leurs sorties respectives 64, 65, 66 des signaux appelés à piloter les dispositifs $\Delta_2$, $\Delta_3$, $\Delta_4$ après mise en forme dans des conformateurs 67, 68, 69.

La figure 7 illustre un exemple de conformateur 63 et d'étage de commande 1.

Le signal rectangulaire délivré à la sortie 62 subit dans le conformateur 63 deux différenciations pour attaquer sous forme impulsionnelle des transistors 70 et 71. Les impulsions issues de ces derniers sont associées par des transistors 72 et 73 pour former un train d'impulsions alternatives K assurant le pilotage de l'étage de commande 1.

Les impulsions ainsi conformées dans les quatre conformateurs 63, 67, 68, 69 schématisés à la figure 6 sont échelonnées dans le temps avec des retards relatifs ajustés par les déphaseurs 59, 60 et 61.

Le train d'impulsions K issu de chaque conformateur est délivré à l'étage de commande 1. En l'exemple de la figure 7, cet étage est constitué par un transformateur d'impulsions 74 ayant deux enroulements secondaires montés en opposition de phase pour délivrer respectivement les signaux de commande opposés Sc et S'c tels qu'illustrés aux figures 5a et 5b.

## Revendications

1. Ensemble statique de conversion d'énergie électrique à semi-conducteurs, destiné à convertir une tension continue d'entrée (2E) en une tension alternative d'amplitude crête à crête inférieure ou égale à cette tension continue (2E), ledit ensemble étant réalisé à partir de dispositifs $\Delta$ formés chacun par l'association de deux convertisseurs, chacun composé :

d'au moins un étage de puissance doté, d'une part, d'au moins un interrupteur statique à blocage commandé ayant un collecteur, une base et un émetteur, d'autre part, d'un circuit d'aide à la commutation associé audit interrupteur statique pour dériver son courant collecteur au cours des commutations de blocage de celui-ci,

d'un étage de commande adapté pour engendrer pour chaque interrupteur statique un signal de commande Sc de forme appropriée à la conversion à réaliser,

d'un étage intermédiaire de traitement, associé à chaque interrupteur statique et possédant une entrée reliée à l'étage de commande pour recevoir le signal Sc, une autre entrée reliée à l'étage de puissance pour détecter la tension collecteur/émetteur $V_{CE}$ de l'interrupteur statique et une sortie reliée à la base dudit interrupteur statique pour déclencher les commutations de celui-ci, ledit étage intermédiaire de traitement étant adapté pour piloter la base dudit interrupteur de façon à rendre l'interrupteur conducteur dans le seul cas où, à la fois, le signal de commande Sc présente une valeur correspondant à une mise en conduction et la tension $V_{CE}$ se trouve voisine de zéro et de façon à assurer une polarisation inverse de ladite base d'interrupteur dans tous les autres cas en vue de bloquer l'interrupteur,

chaque dispositif $\Delta$ formé par l'association de deux convertisseurs sus-évoqués comprenant quatre bornes de puissance reliées aux électrodes de puissance de ses deux interrupteurs statiques (7) : collecteur ($C_1$) et émetteur ($E_1$) du premier interrupteur et collecteur ($C_2$) et émetteur ($E_2$) du second interrupteur,

ledit ensemble statique de conversion étant caractérisé en ce que :

n dispositifs $\Delta$ (n $\geqslant$ 2) sont agencés en série de sorte que les bornes ($E_1$) et ($C_2$) d'un dispositif soient respectivement reliées aux bornes ($C_1$) et ($E_2$) du dispositif suivant, les deux bornes ($C_1$) et ($E_2$) du premier dispositif $\Delta$ recevant la tension continue d'entrée (2E) et les deux bornes ($E_1$) et ($C_2$) du dernier dispositif $\Delta$ étant reliées entre elles pour former une première sortie ($S_1$) de l'ensemble, appelée à être reliée à une charge (50),

un étage répartiteur de tension (51) est connecté aux bornes ($C_1$) et ($E_2$) des différents dispositifs ($\Delta$),

les deux convertisseurs de chaque dispositif $\Delta$ sont commandés en opposition par un étage de commande commun (1) adapté pour engendrer pour les deux interrupteurs statiques (7) desdits convertisseurs, des signaux de commande (Sc et S'c) opposés, de forme appropriée à la conversion à réaliser,

les étages de commande sus-évoqués (1) des différents dispositifs $\Delta$ sont pilotés par une unité de commande centralisée (56), adaptée pour provoquer un retard des signaux de commande (Sc, S'c) d'un dispositif $\Delta$ par rapport aux signaux de commande (Sc, S'c) du dispositif qui le précède dans la série.

2. Ensemble de conversion selon la revendication 1, dans lequel les interrupteurs statiques à blocage commandé sont constitués par des transistors ayant une tenue en tension $V_{CEX}$ (tenue en tension à courant collecteur nul et base polarisée négativement) supérieure à sa tenue en tension $V_{CEO}$ (tenue en tension, base ouverte).

3. Ensemble de conversion selon l'une des revendications 1 ou 2, caractérisé en ce que l'étage répartiteur de tension (51) comporte une borne médiane formant une seconde sortie ($S_2$) de l'ensemble, appelée à être reliée à la charge (50).

4. Ensemble de conversion selon l'une des revendications 1, 2 ou 3 dans lequel l'unité de commande centralisée comprend des étages déphaseurs (59, 60, 61) pilotés par un oscillateur (57, 58) et des conformateurs (63, 67, 68, 69) adaptés pour délivrer des trains d'impulsion de pilotage échelonnés dans le temps.

5. Ensemble de conversion selon l'une des revendications 1, 2 ou 3 ou 4, dans lequel chaque étage de commande (1) comprend un transformateur d'impulsions (74) possédant deux enroulements secondaires montés en opposition de phases pour délivrer les signaux de commande (Sc, S'c).

6. Ensemble de conversion selon l'une des revendications 1, 2, 3, 4 ou 5 dans lequel l'étage répartiteur de tension (51) est adapté pour diviser la tension continue d'entrée (2E) en n fractions approximativement égales (2E/n) et pour appliquer à chaque transistor de puissance une fraction (2E/n) de ladite tension.

7. Ensemble de conversion selon l'une des revendications 1, 2, 3, 4, 5 ou 6 dans lequel l'étage répartiteur de tension (51) comprend :

un ensemble de condensateurs (52), montés en échelle alimentée par la tension continue d'entrée (2E) et comportant des liaisons intermédiaires (53) en vue de fournir la division de tension,

un ensemble de diodes (54, 55) connectées, d'une part, aux liaisons intermédiaires (53) de l'échelle de condensateurs et, d'autre part, aux électrodes de puissance ($C_1$, $E_2$) des transistors de puissance (7), en vue d'appliquer auxdits transistors la répartition de tension fournie par l'échelle de condensateurs.

8. Ensemble de conversion selon la revendication 7, dans lequel les condensateurs (52) ont des capacités approximativement égales, de valeur élevée telle que leur impédance à la fréquence des commutations des dispositifs (Δ) soit négligeable par rapport à l'impédance de charge (50).

## Claims

1. A static electric energy conversion unit with semiconductors intended to convert a direct input voltage (2E) into an alternating voltage, the peak amplitude of which is smaller than or equal to the said direct voltage (2E),

the said unit consisting of circuits Δ each of which is formed by linking the two converters each comprising :

— at least one power stage provided, on the one hand, with at least one static switch for controlled blocking with a collector, a base and an emitter and, on the other hand, an auxiliary switching circuit linked with the said static switch in order to branch of its collector current during the latter's switching operations with a view to blocking,

— a control stage designed to generate for each static switch a control signal Sc in a form suitable to the required conversion,

— an intermediate processing stage linked to each static switch and having an input connected to the command stage in order to receive the signal Sc, a second input connected to the power stage in order to detect the collector/emitter-voltage $V_{CE}$ of the static switch and an output connected to the base of the said static switch in order to initiate the latter's switching operations, the said intermediate processing stage being designed to control the base of the said switch in such a way as to make the switch conductive in the sole case in which, simultaneously, the control signal Sc has a value corresponding to a state of switching on and the voltage $V_{CE}$ is close to zero and so as to ensure inverse polarisation of the said base of the switch in all the other cases with a view to blocking the switch,

each circuit Δ formed by linking the above two converters comprising four power terminals connected to the power electrodes of its two static switches (7) — collector ($C_1$) and emitter ($E_1$) of the first switch and collector ($C_2$) and emitter ($E_2$) of the second switch, the said static conversion unit being characterised in that

n circuits Δ ($n \geqslant 2$) are arranged in series so that the terminals ($E_1$) and ($C_2$) of one circuit are respectively connected to the terminals ($C_1$) and ($E_2$) of the following circuit, the two terminals ($C_1$) and ($E_2$) of the first circuit Δ receiving the direct input voltage (2E) and the two terminals ($E_1$) and ($C_2$) of the second circuit Δ being connected to one another so as to form a first output ($S_1$) of the unit, the said output ($S_1$) to be connected to a load (50),

a voltage dividing stage (51) is connected to terminals ($C_1$) and ($E_2$) of the different circuits Δ, the two converters of each circuit Δ are controlled in opposition by a common control stage (1) designed to generate for the two static switches (7) of the said converters opposed command signals (Sc and S'c) in a form suitable for the required conversion,

the above command stages (1) of the different circuits Δ are controlled by a centralised control unit (56) designed to cause a delay of the control signals (Sc, S'c) of a circuit Δ in relation to the control signals (Sc, S'c) of the preceding circuit in the series.

2. A conversion unit in accordance with claim 1, in which the static switches for controlled blocking consist of transistors having a state of voltage $V_{CEX}$ (state of voltage with collector current zero and negatively polarised base) higher than the state of voltage $V_{CEO}$ (state of voltage with open base).

3. A conversion unit in accordance with one of claims 1 or 2 characterised in that the voltage dividing stage (51) has a central terminal constituting a second output ($S_2$) of the unit serving to connect it to the load (50).

4. A conversion unit in accordance with any of claims 1, 2 or 3 where the centralised command unit comprises phase shifting stages (59, 60, 61) controlled by an oscillator (57, 58) and signal converters (63, 67, 68, 69) designed to supply control pulse sequences according to a time scale.

5. A conversion unit in accordance with any of claims 1, 2 or 3 or 4 in which every control stage (1) comprises a pulse transformer (74) having two secondary windings arranged in phase opposition so as to supply control signals (Sc, S'c).

6. A conversion unit in accordance with any of claims 1, 2, 3, 4 or 5 in which the voltage dividing stage (51) is designed to divide the direct input current (2E) into n approximately equal fractions (2E/n) and to apply to each power transistor a fraction (2E/n) of the said voltage.

7. A conversion unit in accordance with any of claims 1, 2, 3, 4, 5 or 6 in which the voltage dividing stage (51) comprises :

a group of capacitors (52) mounted in a series supplied with direct input current (2E) and having intermediate links (53) with a view to bringing about the voltage division,

a group of diodes (54, 55) connected, on the one hand, to the intermediate links (53) of the series of capacitors and, on the other hand, to the power electrodes ($C_1$, $E_2$) of the power transistors (7) with a view to applying to the said transistors the voltage division brought about by the series of capacitors.

8. A conversion unit in accordance with claim 7 in which the capacitors (52) have approximately equal capacitances of a high value such that their impedance at the switching frequency of the circuits Δ is negligible by comparison with the impedance of load (50).

## Patentansprüche

1. Eine statische elektrische Energieumwandlungseinheit mit Halbleitern zum umwandeln einer Eingangsgleichspannung (2E) in eine Wechselspannung deren Spitzenamplitude geringer oder gleich groß ist wie die besagte Gleichspannung (2E),

wobei die besagte Einheit aus Schaltungen Δ besteht, von denen jede durch die Verbindung von zwei Umformern gebildet wird, von denen jeder die folgenden Stufen umfaßt :

mindestens eine Leistungsstufe mit einerseits mindestens einem statischen Schalter für geregeltes Sperren, der einen Kollektor, eine Basis und einen Emitter umfaßt, und andererseits einen Schalthilfskreis, der mit dem besagten statischen Schalter dahingehend zusammenarbeitet, daß er dessen Kollektorstrom während der Sperrschaltoperationen des besagten Schalters abzweigt,

eine Steuerstufe, die so beschaffen ist, daß sie für jeden statischen Schalter ein Steuersignal Sc erzeugt, und zwar in einer für die gewünschte Umformung geeigneten Form,

eine Zwischenstufe für die Aufbereitung, die an jedem statischen Schalter angeschlossen ist und einen Eingang besitzt, der mit der Steuerstufe verbunden ist, um das Signal Sc zu erhalten, einen weiteren Eingang, der mit der Leistungsstufe verbunden ist, um die Kollektor-/Emitterspannung $V_{CE}$ des statischen Schalters abzunehmen, und einen Ausgang, der mit der Basis des besagten statischen Schalters verbunden ist, um dessen Schaltvorgänge auszulösen, wobei die besagte Aufbereitungszwischenstufe so beschaffen ist, daß die Basis des besagten Schalters so gesteuert wird, daß der Schalter in dem einzigen Fall, in dem das Steuersignal Sc einen dem Einschaltzustand entsprechenden Wert aufweist und die Spannung $V_{CE}$ im Bereiche von Null ist, eingeschaltet und sichergestellt wird, daß in allen anderen Fällen zwecks Sperrung des Schalters umgekehrte Polarisation der besagten Schalterbasis stattfindet, wobei

jede Schaltung Δ, die durch die Verbindung der besagten beiden Umformer gebildet wird, vier an die Leistungselektroden ihrer beiden statischen Schalter (7) — des Kollektors ($C_1$) und des Emitters ($E_1$) des ersten Schalters und des Kollektors ($C_2$) und des Emitters ($E_2$) des zweiten Schalters — angeschlossene Leistungsklemmen besitzt, die besagte statische Umwandlungseinheit dadurch gekennzeichnet ist,

daß n Schaltungen Δ ($n \geqslant 2$) in Reihe geschaltet sind, so daß die Klemmen ($F_1$) und ($C_2$) einer Schaltung an die Klemmen ($C_1$) bzw. ($E_2$) der nächsten Schaltung angeschlossen sind, wobei die beiden Klemmen ($C_1$) und ($E_2$) der ersten Schaltung Δ die Eingangsgleichspannung (2E) erhalten und die beiden Klemmen ($E_1$) und ($C_2$) der letzteren Schaltung Δ untereinander so verbunden sind, daß ein erster Ausgang ($S_1$) der Einheit entsteht, der zum Anschluß an eine Ladung (50) bestimmt ist,

daß eine Spannungsteilerstufe (51) an die Klemmen ($C_1$) und ($E_2$) der verschiedenen Schaltungen Δ angeschlossen ist,

daß die beiden Umformer jeder Schaltung Δ durch eine gemeinsame Steuerstufe (1) gegenläufig gesteuert werden, wobei die besagte Steuerstufe (1) so beschaffen ist, daß sie für die beiden statischen Schalter (7) der besagten Umformer gegenläufige Steuersignale (Sc und S'c) der für die gewünschte Umwandlung geeigneten Form erzeugt,

daß die besagten Steuerstufen (1) der verschiedenen Schaltungen Δ durch eine zentrale Steuereinheit (56) gesteuert werden, die so beschaffen ist, daß sie eine Verzögerung der Steuersignale (Sc, S'c) einer Schaltung Δ im Verhältnis zu den Steuersignalen (Sc, S'c) der in der Reihe vorhergehenden Schaltung bewirkt.

2. Eine Umwandlungseinheit nach Anspruch 1, bei der die statischen Schalter für geregeltes Sperren aus Transistoren bestehen, deren Spannungszustand $V_{CEX}$ (Spannungszustand bei Kollektorstrom Null und negativ polarisierter Basis) höher ist als der Spannungszustand $V_{CEO}$ (Spannungszustand bei offener Basis).

3. Eine Umwandlungseinheit nach Anspruch 1 oder 2, dadurch gekennzeichnet, daß die Spannungsteilstufe (51) eine mittlere Klemme umfaßt, die einen zweiten Ausgang ($S_2$) der Einheit bildet, der zum Anschluß an die Ladung (50) bestimmt ist.

4. Eine Umwandlungseinheit nach einem der Ansprüche 1, 2 oder 3, bei der die zentrale Steuereinheit die durch einen Oszillator (57, 58) und Signalumformer (63, 67, 68, 69) gesteuerte Phasenschieberstufen (59, 60, 61) umfaßt, die so beschaffen sind, daß sie zeitlich gestufte Steuersignalfolgen liefern.

5. Eine Umwandlungseinheit nach einem der Ansprüche 1, 2 oder 3 oder 4, bei der jede Steuerstufe (1) einen Impulsumformer (74) umfaßt, der zwei gegenphasig angeordnete Sekundärwicklungen besitzt, um Steuersignale (Sc, S'c) zu liefern.

6. Eine Umwandlungseinheit nach einem der Ansprüche 1, 2, 3, 4 oder 5, bei der die Spannungsteilstufe (51) zum Teilen der Eingangsgleichspannung (2E) in n annähernd gleiche Teile (2E/n) und zur Anlegung an jeden Leistungstransistor eines Bruchteils (2E/n) der besagten Spannung geeignet ist.

7. Eine Umwandlungseinheit nach einem der Ansprüche 1, 2, 3, 4, 5 oder 6, bei der die Spannungsteilstufe (51) die folgenden Gruppen umfaßt :

eine Gruppe von Kondensatoren (52), die in einer durch die Eingangsgleichspannung (2E) gespeisten Reihe angeordnet sind, wobei die besagte Kondensatorenreihe Zwischenglieder (53) besitzt, um die Spannungsteilung zu bewirken,

eine Gruppe von Dioden (54, 55), die einerseits mit den Zwischengliedern (53) der Kondensatorenreihe und andererseits mit den Leistungselektroden ($C_1$, $E_2$) der Leistungstransistoren (7) verbunden sind, um die durch die Kondensatorenreihe bedingte Spannungsteilung an die besagten Transistoren anzulegen.

8. Eine Energieumwandlungseinheit nach dem Anspruch 7, bei der die Kondensatoren (52) annähernd gleiche Kapazitäten besitzen, die so hoch sind, daß ihre Impedanz bei der Schaltfrequenz der Schaltungen $\Delta$ im Verhältnis zu der Impedanz der Ladung (50) vernachlässigbar gering ist.

Fig. 1

0 101 629

## Fig.2

## Fig.3

Fig. 4

Fig. 5a — Sc1

Fig. 5b — Sc1

Fig. 5c — Sc2

Fig. 5d — Sc3

Fig. 5e — Sc4

Fig. 5f — $V_1$, $E/2$

Fig. 5g — $V_2$

Fig. 5h — $V_3$

Fig. 5j — $V_4$

Fig. 5k — Vch, $+E$, $+E/2$, Ich, $-E/2$, $-E$

Fig. 6

Fig.7